# DEMANDE DE BREVET EUROPEEN

(11) **EP 3 671 445 A1**
(43) Date de publication de la demande: **24.06.2020**
(21) Numéro de dépôt: 19218368.9
(22) Date de dépôt: 19.12.2019
(51) Int. Cl.: G06F 9/455, G06F 9/50, G06F 9/54

(54) **PROCÉDÉ DE STOCKAGE DE DONNÉES DANS UN SYSTÈME DE STOCKAGE VIRTUALISÉ**

(30) Priorité: 20.12.2018 FR 1873547
(71) Demandeur: Bull SAS, 78340 Les Clayes-sous-Bois (FR)
(72) Inventeur: BONNEL, Thierry, 95870 Bezons (FR); VALLEE, Florence, 95870 Bezons (FR); DEJON, Christian, 95870 Bezons (FR); BLEUZE, Patrice, 95870 Bezons (FR)
(74) Mandataire: Plasseraud IP

(57) **Abrégé**

L'invention concerne un procédé de stockage de données d'une application s'exécutant en machine virtuelle (30) gérée par un hyperviseur de virtualisation (32), dans un périphérique de stockage virtualisé (38) correspondant à l'émulation d'au moins une bande magnétique et d'au moins un lecteur de bandes magnétiques associé, par l'intermédiaire d'un protocole (35, 37) d'échange de données au niveau réseau qui d'une part n'est pas dédié au stockage de données et qui d'autre part est supporté par l'hyperviseur de virtualisation (32), via une ou plusieurs simples transmissions, effectuées entre ladite machine virtuelle (30) et ledit périphérique de stockage virtualisé (38), complètement transparentes pour ledit hyperviseur (32), de trames dudit protocole d'échange (35, 37) contenant les données à stocker et/ou les données stockées, sans transformation desdites trames entre ladite machine virtuelle (30) et ledit périphérique de stockage virtualisé (38).

## Description

### DOMAINE DE L'INVENTION

L'invention concerne le domaine des procédés de stockage d'une application s'exécutant en machine virtuelle gérée par un hyperviseur de virtualisation, dans un système de stockage virtualisé. L'invention concerne également les machines virtuelles et les systèmes de stockage virtualisés qui sont associés à ces procédés de stockage.

### ARRIERE PLAN TECHNOLOGIQUE DE L'INVENTION

L'invention concerne notamment le domaine des procédés de stockage pour des applications qui d'une part présentent une valeur importante pour leurs utilisateurs et nécessitent donc de pouvoir être conserver durablement et qui d'autre part sont souvent volumineuses, complexes et difficiles à moderniser surtout longtemps après leur conception.

Il est cependant possible de faire tourner ces applications sans modification notable en environnement virtualisé lequel leur permet d'une part de fonctionner avec une grande longévité et d'autre part de continuer à fonctionner pour un coût et une complexité de maintenance qui restent très limités.

Selon un art antérieur, par exemple décrit dans la demande de brevet US2016/0004611 ou dans le brevet US9135031, il est connu un procédé de stockage d'une application s'exécutant en machine virtuelle qui est gérée par un hyperviseur de virtualisation et qui utilise le protocole d'échange de données iSCSI (« Internet Small Computer Interface» en langue anglaise) lequel est un protocole d'échanges au niveau réseau.

Mais un double inconvénient de cet art antérieur réside dans le fait que ce protocole d'échange de données iSCSI au niveau réseau, d'une part n'est pas supporté par l'hyperviseur de virtualisation pour certains types de stockage, tandis que d'autre part l'hyperviseur de visualisation voit ce type de stockage incompatible, et dégrade, en conséquence, tout ou partie de certaines fonctionnalités usuelles lesquelles ne sont plus possibles, alors que tout ou partie d'entre elles peuvent toutefois être utiles voire nécessaires pour l'application considérée.

Par exemple, d'une part l'utilisation de lecteurs de bandes par une application s'exécutant sur une machine virtuelle dans un environnement virtualisé est soumise à des contraintes particulières ayant pour conséquence de n'être pas supportée par les hyperviseurs de virtualisation. D'autre part, le fait que l'hyperviseur de virtualisation voit et connaisse le protocole d'échange iSCSI au niveau réseau, implique que l'hyperviseur de virtualisation dégrade ou bloque tout ou partie des fonctionnalités requises pour l'utilisation de lecteurs de bandes par une application s'exécutant sur une machine virtuelle dans un environnement virtualisé.

En effet, le protocole d'échange iSCSI encapsule les commandes SCSI et assemble les données transmises en paquets destinés à la couche du protocole d'échange de données au niveau réseau, par exemple TCP/IP. Ces paquets sont acheminés sur le réseau par une connexion point à point. Une fois transmis, ces paquets sont désassemblés par le protocole iSCSI, de manière à isoler les commandes SCSI afin que le système d'exploitation identifie l'emplacement du stockage en tant que périphérique SCSI local. Un initiateur iSCSI est un composant logiciel qui est installé sur le serveur, dans l'hyperviseur, de manière à pouvoir envoyer vers ou à pouvoir recevoir des données en provenance d'un système de stockage, de sorte que cet hyperviseur voit cet initiateur iSCSI tout comme la configuration de ses connexions.

### OBJET DE L'INVENTION

Le but de la présente invention est de fournir un procédé de stockage de données palliant au moins partiellement les inconvénients précités.

Plus particulièrement, l'invention vise à fournir un procédé de stockage d'une application s'exécutant en machine virtuelle gérée par un hyperviseur de virtualisation dans un système de stockage virtualisé au moins partiellement non supporté par cet hyperviseur de virtualisation, par un protocole d'échanges de données à un niveau supérieur, le niveau réseau, qui soit quant à lui supporté par cet hyperviseur de virtualisation, qui ne soit pas un protocole d'échanges de données dédié au stockage de données, et qui ne soit pas du tout vu par l'hyperviseur de virtualisation, car il est complètement transparent pour cet hyperviseur de virtualisation, puisque c'est un simple échange de messages applicatifs véhiculés par le protocole d'échange de niveau réseau, par exemple TCP/IP, lequel est complètement supporté par l'hyperviseur de virtualisation, sans aucune restriction de fonctionnalités, au contraire du protocole iSCSI vu par cet hyperviseur qui dégrade ou bloque donc tout ou partie de ses fonctionnalités intéressantes.

L'invention propose un protocole d'échange de données qui réalise une sorte de simple échange de messages applicatifs transmis par un protocole d'échange de niveau réseau, lequel simple échange est totalement transparent pour l'hyperviseur de virtualisation lequel alors ne voit plus du tout la spécificité incompatible du périphérique de stockage virtualisé et lequel va donc accepter de le supporter complètement.

Pour cela, l'invention va effectuer une simple transmission de messages purement applicatifs par l'intermédiaire d'un protocole de niveau réseau, d'une part dans le sens allant de l'application s'exécutant en machine virtuelle vers le périphérique de stockage virtualisé, et d'autre part dans l'autre sens allant du périphérique de stockage virtualisé vers l'application s'exécutant en machine virtuelle, c'est-à-dire un simple échange de messages applicatifs par l'intermédiaire d'un protocole de niveau réseau, lequel échange n'étant pas vu par l'hyperviseur de virtualisation reste donc complètement transparent pour cet hyperviseur de virtualisation. En fait, l'échange de données se fait d'une part à un niveau plus élevé que d'habitude et d'autre part de manière complètement anonyme, ce qui rend cet échange de données complètement transparent pour l'hyperviseur de virtualisation.

Ceci n'est pas le cas du protocole iSCSI pour lequel l'échange de données s'effectue certes également à un niveau plus élevé que d'habitude mais pas de manière anonyme, puisque l'hyperviseur de virtualisation voit et connaît le protocole iSCSI qui a été installé dans l'hyperviseur de virtualisation de manière à y être vu et reconnu.

Le système de stockage virtualisé va présenter une interface modifiée pour réaliser cet échange de messages applicatifs, tandis que l'application va également présenter une interface modifiée pour réaliser symétriquement ce même échange de messages applicatifs, ce qui permet alors de supprimer complètement les effets de l'incompatibilité entre l'hyperviseur de virtualisation et le système de stockage virtualisé.

A cette fin, la présente invention propose un procédé de stockage de données d'une application s'exécutant en machine virtuelle gérée par un hyperviseur de virtualisation, dans un périphérique de stockage virtualisé correspondant à l'émulation d'au moins une bande magnétique et d'au moins un lecteur de bandes magnétiques associé, par l'intermédiaire d'un protocole d'échange de données au niveau réseau qui d'une part n'est pas dédié au stockage de données et qui d'autre part est supporté par l'hyperviseur de virtualisation, via une ou plusieurs simples transmissions, effectuées entre ladite machine virtuelle et ledit périphérique de stockage virtualisé, complètement transparentes pour ledit hyperviseur, de trames dudit protocole d'échange contenant les données à stocker et/ou les données stockées, sans transformation desdites trames entre ladite machine virtuelle et ledit périphérique de stockage virtualisé.

A cette fin, la présente invention propose aussi une machine virtuelle gérée par un hyperviseur de virtualisation, comprenant une interface machine codée de manière d'une part à envoyer des commandes de stockage de données d'une application s'exécutant sur cette machine virtuelle et d'autre part à recevoir des réponses à ces commandes de la part d'un périphérique de stockage virtualisé correspondant à l'émulation d'au moins une bande magnétique et d'au moins un lecteur de bandes magnétiques associé, par l'intermédiaire d'un protocole d'échange de données au niveau réseau qui d'une part n'est pas dédié au stockage de données et qui d'autre part est supporté par l'hyperviseur de virtualisation, via une ou plusieurs simples transmissions, effectuées entre ladite machine virtuelle et ledit périphérique de stockage virtualisé, complètement transparentes pour ledit hyperviseur, de trames dudit protocole d'échange contenant les données à stocker et/ou les données stockées, sans transformation desdites trames entre ladite machine virtuelle et ledit périphérique de stockage virtualisé.

A cette fin, la présente invention propose également un périphérique de stockage virtualisé correspondant à l'émulation d'au moins un périphérique de stockage virtualisé correspondant à l'émulation d'au moins une bande magnétique et d'au moins un lecteur de bandes magnétiques associé, comprenant une interface stockage codée de manière d'une part à recevoir des commandes de stockage de données d'une application s'exécutant sur une machine virtuelle gérée par cet hyperviseur de virtualisation et d'autre part à envoyer des réponses à ces commandes, par l'intermédiaire d'un protocole d'échange de données au niveau réseau qui d'une part n'est pas dédié au stockage de données et qui d'autre part est supporté par l'hyperviseur de virtualisation, via une ou plusieurs simples transmissions, effectuées entre ladite machine virtuelle et ledit périphérique de stockage virtualisé, complètement transparentes pour ledit hyperviseur, de trames dudit protocole d'échange contenant les données à stocker et/ou les données stockées, sans transformation desdites trames entre ladite machine virtuelle et ledit périphérique de stockage virtualisé.

Préférentiellement, le protocole d'échange de données est TCP/IP (« Transport Control Protocol / Internet Protocol » en langue anglaise). Ce protocole d'échange de données est TCP/IP, universellement connu, n'est évidemment pas un protocole dédié au stockage de données bien qu'il soit largement utilisé aujourd'hui dans ce contexte.

La présente invention propose un procédé de stockage de données d'une application s'exécutant en machine virtuelle, dans un système de stockage virtualisé correspondant à l'émulation d'au moins une bande magnétique et d'au moins un lecteur de bandes magnétiques associé, par l'intermédiaire avantageusement d'un protocole d'échange de données qui est TCP/IP.

La présente invention propose aussi une machine virtuelle comprenant une interface machine codée de manière d'une part à envoyer des commandes de stockage de données d'une application s'exécutant sur cette machine virtuelle et d'autre part à recevoir des réponses à ces commandes de la part d'une émulation d'au moins une bande magnétique et d'au moins un lecteur de bandes magnétiques associé, avantageusement par l'intermédiaire d'un protocole d'échange de données au niveau réseau qui est TCP/IP.

Ces commandes de stockage, de même que les réponses à ces commandes de stockage, sont de type SCSI ou similaires à des commandes de stockage SCSI, mais ce ne sont pas des commandes de stockage SCSI ni même des commandes SCSI encapsulées, de manière à pouvoir rester complètement transparentes pour l'hyperviseur de virtualisation. Ces commandes de stockage ainsi que leurs réponses peuvent tout simplement être définies dans un protocole propriétaire, de manière à être reconnues aussi bien par la machine s'exécutant en machine virtuelle que par le périphérique de stockage virtualisé, tout en restant ainsi anonyme et donc complètement transparentes pour l'hyperviseur de virtualisation lequel ne dégradera ni ne bloquera donc aucune des fonctionnalités requises par ces commandes de stockage et par leurs réponses.

Les bandes sont des mémoires à accès séquentiel, comme les bandes magnétiques classiques. Certaines fonctionnalités sont spécifiques à ces bandes. Chaque bande doit préférentiellement pouvoir notamment être montée et démontée dans le système de stockage. Sur chaque bande, l'accès des données est séquentiel. Par conséquent, la bande doit préférentiellement pouvoir être rembobinée, et elle doit aussi préférentiellement pouvoir se positionner à un endroit précis (en étant déroulée jusqu'à cet endroit précis).

Le périphérique de stockage émulé comprend l'émulation d'au moins une bande magnétique et d'au moins un lecteur de bandes magnétiques associé. Ce type de mémoire comprend des fonctionnalités spécifiques lesquelles sont souvent non supportées par les hyperviseurs de virtualisation, rendant donc l'utilisation de l'invention particulièrement intéressante. L'émulation de la bande magnétique et du lecteur de bandes magnétiques associé correspond à l'émulation d'une ou de plusieurs mémoires qui sont des mémoires à accès séquentiel pour la lecture et pour l'écriture et qui sont des mémoires amovibles.

Ainsi, non seulement un périphérique de stockage élémentaire, mais aussi une bibliothèque de plusieurs voire de nombreux périphériques de stockage élémentaires, éventuellement identiques ou similaires entre eux, vont pouvoir être émulés. Ainsi, par exemple non seulement une bande, mais aussi une bibliothèque de plusieurs voire de nombreuses bandes, vont pouvoir être émulées.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un et/ou l'autre des objets de l'invention précités.

Préférentiellement, l'utilisation de ces systèmes de stockage par les applications a été programmée en langage COBOL. Leur adaptation directe serait complexe et coûteuse. Il est plus simple et plus efficace de virtualiser ces systèmes de stockage qui sont des bandes.

De préférence, le protocole d'échange de données au niveau réseau est TCP/IP. C'est un protocole très connu et largement utilisé, il est parfaitement compatible avec les hyperviseurs de virtualisation, et il permet d'intégrer et d'extraire facilement et efficacement les commandes et les réponses de systèmes de stockage virtualisés, en particulier des bandes de stockage.

De préférence, lesdites transmissions de trames sont complètement transparentes pour ledit hyperviseur, de manière à ce que toutes les fonctions de virtualisation de l'hyperviseur soient maintenues sans restriction. Ainsi, les effets négatifs de l'absence de support du périphérique de stockage virtualisé par l'hyperviseur de virtualisation ont été complètement supprimés.

Maintenant vont être maintenues une ou plusieurs fonctions spécifiques qui sont particulièrement intéressantes dans le cas de l'émulation d'une bande magnétique et d'un lecteur de bandes magnétiques associé, et qui sont les suivantes.

De préférence, est maintenue la fonction de transfert, entre une machine physique et une autre machine physique, d'une machine virtuelle hébergeant une application, pendant le déroulement de ladite application, sans arrêt de ladite application.

De préférence, est maintenue la fonction de reprise sur incident, transférant entre une première machine physique et une deuxième machine physique, une machine virtuelle hébergeant une application, de manière à redémarrer ladite application sur la deuxième machine physique juste après son arrêt accidentel suite à une panne survenue sur la première machine physique, sans redémarrer ni ledit hyperviseur ni ledit périphérique de stockage virtualisé.

De préférence, l'absence de transformation desdites trames entre ladite machine virtuelle et ledit périphérique de stockage virtualisé implique d'une part qu'aucune extraction ni aucune insertion de données hors ou dans lesdites trames n'est réalisée et d'autre part qu'aucune conversion desdites trames dans un autre protocole n'est réalisée.

De préférence, les données sont extraites et/ou insérées hors et/ou dans les trames uniquement d'une part au niveau de ladite machine virtuelle et d'autre part au niveau dudit périphérique de stockage virtualisé.

Ainsi, d'une part la transparence est vraiment complète et d'autre part la transmission est plus rapide et plus immédiate, avec un risque d'incident réduit au maximum grâce à l'absence de transformation tout au long de la transmission.

De préférence, lesdites trames sont transmises sur une liaison Ethernet.

De préférence, le format des données contenues dans lesdites trames est un format propriétaire non reconnu par ledit hyperviseur. Ainsi, les données étant encore moins facilement reconnaissables par l'hyperviseur de virtualisation, il est encore plus facile de rendre leur transmission complètement transparente pour l'hyperviseur de virtualisation.

Préférentiellement, le protocole de communication TCP/IP transporte des commandes de type SCSI mais qui ne sont pas des commandes SCSI, et même pour leurs réponses. Un nouveau protocole de messages véhiculés par TCP/IP est avantageusement défini au niveau de l'interface logicielle « Socket » en modèle client-serveur. Les messages échangés simulent alors l'envoi de ces commandes et la réception de leur réponse. Ces commandes et leurs réponses sont avantageusement intégrées dans des trames IP.

De préférence, le périphérique de stockage émulé écoute les requêtes de la ou des applications au niveau d'un point de communication défini par l'association d'une adresse IP et d'un numéro de port. Ainsi, il peut traiter les requêtes de différentes applications clientes, mais il doit toutefois les traiter dans leur ordre d'arrivée. En fait, chaque lecteur émulé est accessible via une paire constituée d'une adresse IP et d'un numéro de port. Pour chaque adresse IP, plusieurs lecteurs de bandes peuvent être émulés. Pour un serveur de stockage, plusieurs adresses IP peuvent être configurées. Les échanges se font sur réseau Ethernet/IP. Un lecteur de bande est décrit par un couple <IP><port#>. Le lecteur de bande virtuel crée un point de communication de type Socket sur lequel il écoute les requêtes des différents clients potentiels. Un logiciel pilote (« driver » en langue anglaise) de lecteur virtuel n'étant pas partageable, c'est la première application cliente se connectant qui accède au lecteur jusqu'à terminaison initiée par cette application cliente. Le lien Socket ouvert est bidirectionnel. Il permet à une application de transmettre ses requêtes et les données associées, et au système de stockage virtualisé d'envoyer les réponses aux requêtes et les données associées. Le protocole est synchrone, le système de stockage ne traite une requête qu'après avoir envoyé la réponse à la requête précédente.

De préférence, l'application est une application critique sécurisée requérant une sauvegarde dynamique. Ainsi, l'utilisation de l'invention est particulièrement intéressante dans la mesure, où même lorsque les hyperviseurs de virtualisation sont suffisamment évolués pour offrir un support au moins partiel de n'importe quel système de stockage virtualisé, ces hyperviseurs de virtualisation n'offrent cependant pas de fonctionnalité de sauvegarde dynamique.

De préférence, la gestion du périphérique de stockage émulé lui-même est effectuée à l'aide d'un protocole de communication qui d'une part est différent du protocole d'échange de données au niveau réseau et d'autre part n'est pas dédié au stockage de données.

Ce système de stockage virtualisé fournit une émulation de lecteur de bandes offrant un protocole de communication réseau, préférentiellement TCP/IP, et non plus de type connexion fibre. Le chemin de données est donc changé pour utiliser le mode de connexion réseau. En revanche, le chemin de commandes, gérant les demandes de montage et démontage des bandes, demeure inchangé car il est indépendant de la liaison de type connexion fibre.

De préférence, la machine virtuelle est basée sur la virtualisation d'un système d'exploitation propriétaire. L'utilisation de l'invention est d'autant plus intéressante que la mise à jour et l'évolution d'un tel système d'exploitation propriétaire est plus difficile et plus délicate, il faut en effet avoir accès à des informations propriétaires lesquelles sont par définition moins accessibles voire pas accessibles.

De préférence, l'hyperviseur de virtualisation est un hyperviseur de virtualisation « VMware ».

De préférence, le moteur du système de stockage virtualisé s'exécute sur une plateforme « AIX ».

Préférentiellement, le système de stockage virtualisé comprend un serveur associé à une grappe de disques et à un logiciel d'émulation de l'espace disque de la grappe de disques en au moins une bande magnétique virtuelle et en au moins un lecteur de bandes magnétiques associé virtuel, et préférentiellement en plusieurs bandes magnétiques virtuelles et en un ou plusieurs lecteurs de bandes magnétiques associés virtuels. Ainsi, un bon compromis est réalisé entre d'une part cet ancien système de bandes magnétiques peu évolutif qu'il n'est alors plus nécessaire de faire évoluer et dont les données qui y sont stockées peuvent être gardées telles quelles dans leur structure et d'autre part le nouveau système de stockage technologique performant qui peut être utilisé sans nécessiter de restructurer les données à y stocker.

L'application accède à des bandes de stockage par l'intermédiaire d'un système de stockage virtualisé. Ce système de stockage virtualisé comporte un serveur, une grappe de disques et un logiciel capable d'émuler cet espace disque en bandes magnétiques de stockage. Dans cet environnement virtualisé de l'application, le système de stockage est modifié au niveau de son interface pour s'adapter au nouveau protocole de communication réseau.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

**[****Fig. 1****]** La figure 1 représente schématiquement un exemple de procédé de stockage d'une application s'exécutant en machine virtuelle gérée par un hyperviseur de virtualisation, dans un système de stockage virtualisé qui n'est pas supporté par cet hyperviseur de virtualisation, selon un mode de réalisation de l'invention.
**[****Fig. 2****]** La figure 2 représente schématiquement un comparatif entre l'échange de données dans le cas de l'art antérieur et l'échange de données dans le cas de l'invention.

### DESCRIPTION DETAILLEE DE L'INVENTION

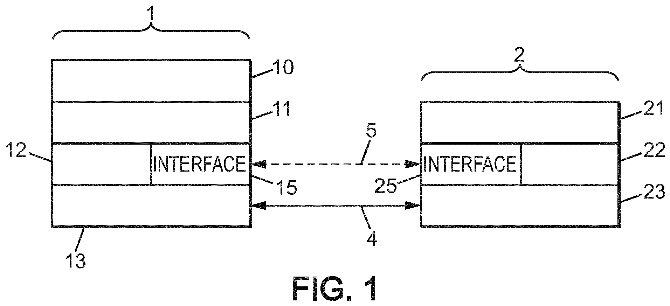

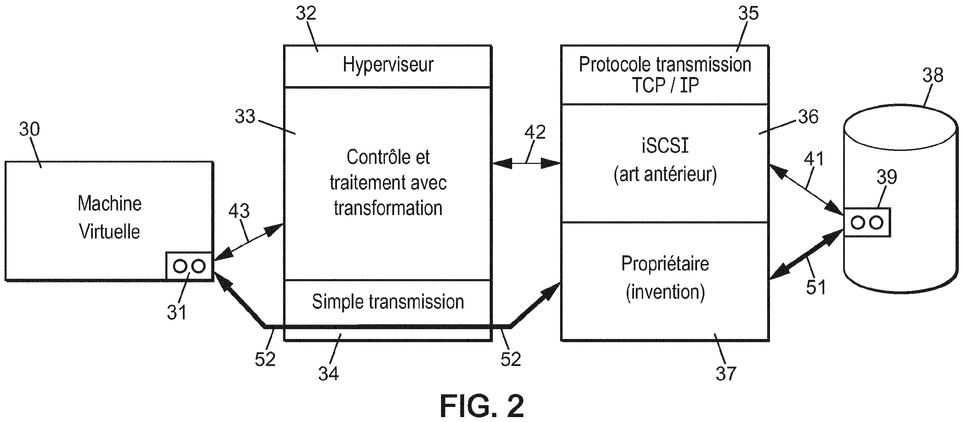

La figure 1 représente schématiquement un exemple de procédé de stockage d'une application s'exécutant en machine virtuelle gérée par un hyperviseur de virtualisation, dans un système de stockage virtualisé qui n'est pas supporté par cet hyperviseur de virtualisation, selon un mode de réalisation de l'invention. Dans l'environnement virtualisé du système informatique de la figure 2, l'application ou les applications 1 et le système de stockage virtualisé 2 sont modifiés pour utiliser un protocole de communication réseau et non plus un protocole de communication de type connexion fibre.

Le système informatique comprend une partie application 1 et une partie stockage 2 qui communiquent par l'intermédiaire d'un protocole TCP/IP comprenant deux niveaux qui sont une liaison 4 réseau IP sur laquelle circulent les données stockées ainsi qu'une liaison 5 de commandes haut niveau TCP située au-dessus de la liaison 4.

La partie application 1 s'exécutant sur machine virtuelle comprend un empilement de plusieurs couches 10 à 13, la couche 12, par exemple « Api Tape », étant au-dessus de la couche 13, par exemple « Windows Socket », et comprenant une interface application 15, par exemple « New Interface Socket », la couche 11, par exemple « V7000 DIITape », étant au-dessus de la couche 12, la couche 10, par exemple « GCOS », étant au-dessus de la couche 11. La partie stockage virtualisé 2 comprend un empilement de plusieurs couches 21 à 23, la couche 22, gérant par exemple les commandes SCSI, étant au-dessus de la couche 23, par exemple « AIX », et comprenant une interface stockage 25, par exemple « New Interface Socket », la couche 21, par exemple «Moteur Virtuo », étant au-dessus de la couche 22. La couche 13 de la partie application 1 communique avec la couche 23 de la partie stockage virtualisé 2 par la liaison 4 sur laquelle circulent les données stockées et les données à stocker la liaison 5 qui permet l'échange de commandes haut niveau entre les interfaces application 15 et stockage 25. Ce sont ces interfaces, interface application 15 et interface stockage 25, qui permettent d'intégrer et d'extraire les commandes de stockage dans des trames IP complètement transparentes pour l'hyperviseur de visualisation. Ces commandes de stockage peuvent être de type SCSI ou similaires à des commandes SCSI dans les fonctionnalités qu'elles représentent, mais ce ne sont pas des commandes SCSI, de manière à rester complètement transparentes à l'hyperviseur de virtualisation, au contraire du protocole iSCSI de l'art antérieur.

La couche 10 représente un exemple de système d'exploitation propriétaire GCOS7. Il permet d'exécuter une ou plusieurs applications 1 critiques et sécurisées, écrites principalement en langage de programmation COBOL. Le système GCOS7 tourne dans une machine virtuelle V7000 (« Virtualized 7000 » en langue anglaise) représentée par la couche 11, elle-même, s'exécutant sur un système « Microsoft Windows » (marque déposée) représenté par les couches 12 et 13. La machine virtuelle V7000 est l'émulation du micro-logiciel des plates-formes GCOS7 sur Windows (marque déposée). La machine virtuelle V7000 implémente l'ensemble des instructions de l'assembleur du système d'exploitation GCOS7 parmi lesquelles, le support du multiprocessus, la programmation des entrées et sorties, l'administration du système et les mécanismes de communications sur une architecture Intel (marque déposée).

L'application 1 est un produit basé sur la virtualisation de l'architecture GCOS7 composée du système « Microsoft Windows Server » (marque déposée) de la machine virtuelle V7000 et du système d'exploitation GCOS7. C'est donc une application virtualisée qui se présente sous la forme d'une machine virtuelle qui s'exécute sur l'hyperviseur de virtualisation « VMware ».

La ou les applications 1 s'exécutant dans GCOS7 ont la possibilité d'écrire sur des bandes gérées par le moteur Virtuo représenté par la couche 21. Le moteur Virtuo est un système de stockage virtualisé incluant un serveur, une grappe de disques et un logiciel capable d'émuler cet espace disque en bandes. Le moteur Virtuo s'exécute sur un dispositif AIX représenté par la couche 23. La couche 22 représente un système de commandes de stockage qui ne sont pas des commandes SCSI.

Une nouvelle communication TCP/IP est effectuée sur les liaisons 4 et 5. Du côté de l'application 1, le nouveau protocole TCP/IP est implémenté au niveau de la machine virtuelle V7000. Il est transparent pour les applications 1 et le système d'exploitation GCOS7. Du côté du système de stockage virtualisé 2, le nouveau protocole s'appuyant sur TCP/IP est implémenté dans un module logiciel en amont des autres modules du système de stockage virtualisé 2 afin de limiter les impacts dans le moteur Virtuo.

Sur les liaisons 4 et 5 avec le protocole TCP/IP, la communication s'appuie sur un dispositif AIX de type « Standard Ethernet Network Interface » attaché à une carte réseau.

Le chemin de données passe par la communication TCP/IP sur les liaisons 4 et 5. Le chemin de commandes, gérant les demandes de montage et démontage des bandes, demeure inchangé. La gestion de ces commandes est réalisée par une émulation de type ACSLS (« Automated Cartridge System Library Software » en langue anglaise) qui est un logiciel de serveur de stockage « Oracle Storage Tek ».

La figure 2 représente schématiquement un comparatif entre l'échange de données dans le cas de l'art antérieur et l'échange de données dans le cas de l'invention.

Une machine virtuelle 30 intégrant une interface 31 apte à échanger des données avec l'émulation d'un lecteur de bandes magnétiques 39 et d'une bibliothèque de bandes magnétiques intégrée à un périphérique de stockage virtualisé 38.

La machine virtuelle 30 est gérée par un hyperviseur 32 de virtualisation qui comprend plusieurs parties, dont une partie de contrôle et de traitement 33 des données échangées lorsque l'hyperviseur 32 voit et reconnaît le type de données échangées, entraînant une transformation des données échangées et une perte des fonctionnalités associées à ces données échangées lorsque l'hyperviseur 32 ne supporte pas ou pas complètement le périphérique de stockage virtualisé 38. L'hyperviseur 32 comprend aussi une partie réalisant une simple transmission des données échangées au niveau protocole réseau lorsque le type des données échangées est anonyme pour l'hyperviseur 32, c'est-à-dire lorsque ce type de données échangées n'est pas reconnu par l'hyperviseur 32. Dans ce cas-là, l'hyperviseur 32 se contente de simplement transmettre les trames contenant les données échangées sans effectuer aucune transformation de ces trames.

Le protocole de transmission et d'échange des données est le protocole 35 de niveau réseau TCP/IP dans les deux cas, mais pour l'art antérieur il s'agit de commandes de stockage 36 au format SCSI encapsulées (protocole iSCSI) reconnaissables par l'hyperviseur 32, tandis que pour l'invention, il s'agit de commandes de stockage 37 dans un format propriétaire anonyme non reconnaissable par l'hyperviseur 32.

Pour l'art antérieur, entre le périphérique de stockage virtualisé 38 émulant lecteur de bandes magnétiques et bibliothèque de bandes magnétiques 39 d'une part et la machine virtuelle 30 présentant une interface 31 apte à communiquer avec l'émulation de lecteur de bandes magnétiques et de bibliothèque de bandes magnétiques 39 d'autre part, un flux d'échange des données 41 est encapsulé, par le protocole 36 iSCSI, dans un paquet de trames 42 qui est transformé par la partie contrôle et traitement 33 de l'hyperviseur 32 qui reconnaît ce protocole 36 iSCSI, pour arriver dégradé voire même bloqué en tout ou partie sous la forme du flux d'échange de données 43, puisque l'hyperviseur 32 ne supporte pas le périphérique de stockage virtualisé 38 émulant lecteur de bandes magnétiques et bibliothèques de bandes magnétiques.

Au contraire, pour l'invention, entre le périphérique de stockage virtualisé 38 émulant lecteur de bandes magnétiques et bibliothèque de bandes magnétiques 39 d'une part et la machine virtuelle 30 présentant une interface 31 apte à communiquer avec l'émulation de lecteur de bandes magnétiques et de bibliothèque de bandes magnétiques 39 d'autre part, un flux d'échange des données 51 est intégré, par le protocole 37 dont le format propriétaire de commandes de stockage n'est pas reconnu par l'hyperviseur 32, dans un paquet de trames 52 lequel traverse directement et sans transformation la partie simple transmission 34 de l'hyperviseur 32 puisque celui-ci ne reconnaît pas le protocole 37 ne voyant qu'un simple échange de messages applicatifs via un protocole de niveau réseau (par exemple TCP/IP), pour arriver tel quel à destination.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de stockage de données d'une application s'exécutant en machine virtuelle (30) gérée par un hyperviseur de virtualisation (32), dans un périphérique de stockage virtualisé (38) correspondant à l'émulation d'au moins une bande magnétique et d'au moins un lecteur de bandes magnétiques associé, par l'intermédiaire d'un protocole (35, 37) d'échange de données au niveau réseau qui d'une part n'est pas dédié au stockage de données et qui d'autre part est supporté par l'hyperviseur de virtualisation (32), via une ou plusieurs simples transmissions, effectuées entre ladite machine virtuelle (30) et ledit périphérique de stockage virtualisé (38), complètement transparentes pour ledit hyperviseur (32), de trames dudit protocole d'échange (35, 37) contenant les données à stocker et/ou les données stockées, sans transformation desdites trames entre ladite machine virtuelle (30) et ledit périphérique de stockage virtualisé (38).

2. Procédé de stockage selon la revendication 1, **caractérisé en ce que** ledit protocole (35, 37) d'échange est le protocole TCP/IP.

3. Procédé de stockage selon l'une quelconque des revendications précédentes, **caractérisé en ce que** lesdites transmissions de trames sont complètement transparentes pour ledit hyperviseur (32), de manière à ce que toutes les fonctions de virtualisation de l'hyperviseur (32) soient maintenues sans restriction.

4. Procédé de stockage selon la revendication 3, **caractérisé en ce qu'**est maintenue la fonction de transfert, entre une machine physique et une autre machine physique, d'une machine virtuelle (30) hébergeant une application (1), pendant le déroulement de ladite application (1), sans arrêt de ladite application (1).

5. Procédé de stockage selon la revendication 3 ou 4, **caractérisé en ce qu'**est maintenue la fonction de reprise sur incident, transférant entre une première machine physique et une deuxième machine physique, une machine virtuelle (30) hébergeant une application (1), de manière à redémarrer ladite application (1) sur la deuxième machine physique juste après son arrêt accidentel suite à une panne survenue sur la première machine physique, sans redémarrer ni ledit hyperviseur (32) ni ledit périphérique de stockage virtualisé (38).

6. Procédé de stockage selon l'une quelconque des revendications précédentes, **caractérisé en ce que** l'absence de transformation desdites trames entre ladite machine virtuelle (30) et ledit périphérique de stockage virtualisé (38) implique d'une part qu'aucune extraction ni aucune insertion de données hors ou dans lesdites trames n'est réalisée et d'autre part qu'aucune conversion desdites trames dans un autre protocole n'est réalisée.

7. Procédé de stockage selon l'une quelconque des revendications précédentes, **caractérisé en ce que** les données sont extraites et/ou insérées hors et/ou dans les trames uniquement d'une part au niveau de ladite machine virtuelle (30) et d'autre part au niveau dudit périphérique de stockage virtualisé (38).

8. Procédé de stockage selon l'une quelconque des revendications précédentes, **caractérisé en ce que** lesdites trames sont transmises sur une liaison Ethernet.

9. Procédé de stockage selon l'une quelconque des revendications précédentes, **caractérisé en ce que** le format des données contenues dans lesdites trames est un format propriétaire non reconnu par ledit hyperviseur (32).

10. Procédé de stockage selon l'une quelconque des revendications précédentes, **caractérisé en ce que** le périphérique de stockage émulé (38, 39) écoute les requêtes de la ou des applications au niveau d'un point de communication défini par l'association d'une adresse IP et d'un numéro de port.

11. Procédé de stockage selon l'une quelconque des revendications précédentes, **caractérisé en ce que** l'application (1) est une application critique sécurisée requérant une sauvegarde dynamique.

12. Procédé de stockage selon l'une quelconque des revendications précédentes, **caractérisé en ce que** la gestion du périphérique de stockage émulé (38, 39) lui-même est effectuée à l'aide d'un protocole (35, 37) de communication qui d'une part est différent du protocole d'échange de données au niveau réseau et d'autre part n'est pas dédié au stockage de données.

13. Procédé de stockage selon l'une quelconque des revendications précédentes, **caractérisé en ce que** la machine virtuelle (30) est basée sur la virtualisation d'un système d'exploitation propriétaire.

14. Procédé de stockage selon l'une quelconque des revendications précédentes, **caractérisé en ce que** l'hyperviseur de virtualisation (32) est un hyperviseur de virtualisation VMware.

15. Procédé de stockage selon l'une quelconque des revendications précédentes, **caractérisé en ce que** le moteur du périphérique de stockage virtualisé (38) s'exécute sur une plateforme AIX.

16. Machine virtuelle (30) gérée par un hyperviseur de virtualisation (32), comprenant une interface machine (31) codée de manière d'une part à envoyer des commandes de stockage de données d'une application s'exécutant sur cette machine virtuelle (30) et d'autre part à recevoir des réponses à ces commandes de la part d'un périphérique de stockage virtualisé (38) correspondant à l'émulation d'au moins une bande magnétique et d'au moins un lecteur de bandes magnétiques associé, par l'intermédiaire d'un protocole (35, 37) d'échange de données au niveau réseau qui d'une part n'est pas dédié au stockage de données et qui d'autre part est supporté par l'hyperviseur de virtualisation (32), via une ou plusieurs simples transmissions, effectuées entre ladite machine virtuelle (30) et ledit périphérique de stockage virtualisé (38), complètement transparentes pour ledit hyperviseur (32), de trames dudit protocole d'échange contenant les données à stocker et/ou les données stockées, sans transformation desdites trames entre ladite machine virtuelle (30) et ledit périphérique de stockage virtualisé (38).

17. Périphérique de stockage virtualisé (38) correspondant à l'émulation d'au moins un périphérique de stockage virtualisé correspondant à l'émulation d'au moins une bande magnétique et d'au moins un lecteur de bandes magnétiques associé, comprenant une interface stockage (39) codée de manière d'une part à recevoir des commandes de stockage de données d'une application s'exécutant sur une machine virtuelle (30) gérée par cet hyperviseur de virtualisation (32) et d'autre part à envoyer des réponses à ces commandes, par l'intermédiaire d'un protocole (35, 37) d'échange de données au niveau réseau qui d'une part n'est pas dédié au stockage de données et qui d'autre part est supporté par l'hyperviseur de virtualisation (32), via une ou plusieurs simples transmissions, effectuées entre ladite machine virtuelle (30) et ledit périphérique de stockage virtualisé (38), complètement transparentes pour ledit hyperviseur (32), de trames dudit protocole d'échange contenant les données à stocker et/ou les données stockées, sans transformation desdites trames entre ladite machine virtuelle (30) et ledit périphérique de stockage virtualisé (38).
